# EUROPEAN PATENT APPLICATION

(11) **EP 2 996 022 A1**
(43) Date of publication of application: **16.03.2016**
(21) Application number: 14795029.9
(22) Date of filing: 09.05.2014
(51) Int. Cl.: G06F 3/0481, G06F 3/0346, G06F 3/0488

(54) **INPUT ASSISTANCE DEVICE, INPUT ASSISTANCE METHOD, AND PROGRAM**

(30) Priority: 10.05.2013 JP 2013100590
(71) Applicant: Geis Co. Ltd., Minato-ku, Tokyo 107-0052 (JP)
(72) Inventor: MIYAGI, Hideto, Tokyo 107-0052 (JP); TANAKA, Kazuki, Tokyo 107-0052 (JP)
(74) Representative: Hoffmann Eitle
(86) International application number: PCT/JP2014/062517
(87) International publication number: WO 2014/181876

(57) **Abstract**

An object is to provide an input support apparatus, a method of input support, and a computer program that can appropriately perform feedback to a user when a noncontact operation is performed without using a controller. The present invention continuously acquires space coordinates of a certain part of a user via a detector and, based on the updated space coordinates, performs display control to move a marker to a corresponding position on a display screen of a display unit, where an initial shape of the marker includes a plurality of shapes obtained by dividing any desired shape, and display control is performed that separates the shapes more widely from each other from the corresponding position on the display screen as a distance of the space coordinates to a certain plane in a coordinate system of the space coordinates is longer and brings the shapes closer to each other to the corresponding position on the display screen as the distance is shorter.

## Description

### Field

The present invention relates to an input support apparatus, a method of input support, and a computer program.

### Background

Methods for remotely operating a computer without using a controller have been developed conventionally.

Patent Literature 1 discloses a method for controlling a computer device including a hand tracker that tracks movement of a hand of a user by detecting a continuous feature in an optical pattern projected onto the hand. In the method, the controlling is performed by moving an image (a first image) of the hand in accordance with the movement of the hand tracked by the hand tracker while the hand is moved so that a second image such as a virtual keyboard on display and the first image are caused to interact with each other, for example.

Kinect for Windows (registered trademark) SDK 1.7 listed as Non Patent Literature 1 discloses a technique that detects space coordinates of a hand of a user, moves a cursor on a display screen in accordance with detected plane coordinates, and when pressing of a display button depending on a detected depth is determined, changes a color of the cursor continuously in accordance with the depth, thereby feeding back to the user a depth status all the way to the completion of button pressing.

### Citation List

### Patent Literature

Patent Literature 1: Publication of Japanese Translation of PCT Application No. 2013-505508
Non Patent Literature 1: "New Features: Microsoft Kinect for Windows," online, 2013, Microsoft Corporation, at <URL:http://www.microsoft.com/en-us/kinectforwindows/Develop/New.aspx>, retrieved on May 7, 2013.

### Summary

### Technical Problem

However, the conventional remote control techniques that use no controller have a problem in that it is difficult for a user to know at what point of time selection such as button pressing is determined to have been made, leading to a malfunction.

The method of remote control disclosed in Patent Literature 1 has a problem in that although the image displaying the hand of the user moves on the image of the keyboard on display, and the user can press keyboard keys when moving his/her fingers in a manner like typing operation, feedback to the user is deficient about in what stage key pressing operation is determined to have been made, and typing errors are likely to be brought about, unlike a physical keyboard.

The method of remote control disclosed in Non Patent Literature 1 has a problem in that although the depth of the hand of the user is fed back as the color of the cursor, the user operates while holding his/her hand over the display, and the cursor may be hidden by the hand, which may still bring about a malfunction.

The present invention has been made in view of the above problems, and an object thereof is to provide an input support apparatus, a method of input support, and a computer program that can appropriately perform feedback to a user when an operation is performed in a noncontact manner without using a controller.

### Solution to Problem

It is an object of the present invention to at least partially solve the problems in the conventional technology. According to an aspect of the present invention, an input support apparatus includes: a space coordinates acquiring unit that continuously acquires space coordinates of a certain part of a user via a detector; and a display controller that, based on the space coordinates updated by the space coordinates acquiring unit, performs display control to move a marker to a corresponding position on a display screen of a display unit, wherein an initial shape of the marker includes a plurality of shapes obtained by dividing any desired shape, and the display controller separates the shapes more widely from each other starting from the corresponding position on the display screen as a distance of the space coordinates to a certain plane in a coordinate system of the space coordinates is longer, and brings the shapes closer to each other toward the corresponding position on the display screen as the distance is shorter.

According to another aspect of the present invention, the input support apparatus further includes a pressing determining unit that, when the updated space coordinates have passed the certain plane, determines that a pressed state has been entered, and with the updated space coordinates having passed the certain plane, the display controller displays as the marker the shape before being divided obtained by combining together the shapes.

According to still another aspect of the present invention, in the input support apparatus, based on the space coordinates updated by the space coordinates acquiring unit, the display controller further displays a cursor at the corresponding position on the displays screen, and with the updated space coordinates having passed the certain plane, the pressing determining unit determines that a position of the cursor has entered the pressed state.

According to still another aspect of the present invention, in the input support apparatus, the shape before being divided of the marker is an annular ring, a donut shape, or a shape from which a combined shape is easily predictable.

According to still another aspect of the present invention, in the input support apparatus, the certain plane is set about a few centimeters off, and on a near side of, the display screen, the certain part of the user is a finger, a hand, or a palm, and the display controller displays the marker in a size larger than the certain part or displays a separation range of the initial shape of the marker in a size larger than the certain part.

According to still another aspect of the present invention, in the input support apparatus, the distance of the space coordinates to the certain plane is a distance of the space coordinates to the certain plane on a side where the user is positioned.

According to still another aspect of the present invention, in the input support apparatus, the space coordinates are three-dimensional coordinates including two-dimensional coordinates on the certain plane parallel to the display screen and a depth coordinate perpendicular to the certain plane, and the display controller moves a center of the marker to a position corresponding to the display screen of the two-dimensional coordinates updated by the space coordinates acquiring unit, and displays the shapes separated from the center more closely to each other as one continuous shape as the depth coordinate updated by the space coordinates acquiring unit is brought closer to zero with respect to the certain plane.

According to still another aspect of the present invention, a method of input support executed by a computer, the method includes: continuously acquiring space coordinates of a certain part of a user via a detector; and based on the space coordinates updated at the acquiring, performing display control to move a marker to a corresponding position on a display screen of a display unit, and an initial shape of the marker includes a plurality of shapes obtained by dividing any desired shape, and the performing of display control includes separating the shapes more widely from each other starting from the corresponding position on the display screen as a distance of the space coordinates to a certain plane in a coordinate system of the space coordinates is longer and bringing the shapes closer to each other toward the corresponding position on the display screen as the distance is shorter.

According to still another aspect of the present invention, a computer program causes a computer to execute: continuously acquiring space coordinates of a certain part of a user via a detector; and based on the space coordinates updated at the acquiring, performing display control to move a marker to a corresponding position on a display screen of a display unit, and an initial shape of the marker includes a plurality of shapes obtained by dividing any shape, and the performing of display control includes separating the shapes more widely from each other from the corresponding position on the display screen as a distance of the space coordinates to a certain plane in a coordinate system of the space coordinates is longer and bringing the shapes closer to each other toward the corresponding position on the display screen as the distance is shorter.

The present invention relates to a recording medium, where the recording medium has the computer program recorded therein.

The recording medium causes a computer to read and execute the computer program recorded in the recording medium, thereby enabling the method to be implemented by using the computer and effects similar to those of the methods to be obtained.

### Advantageous Effects of Invention

According to the present invention, space coordinates of a certain part of a user are continuously acquired via a detector and display control to move a marker to a corresponding position on a display screen of a display unit is performed based on the updated space coordinates. An initial shape of the marker includes a plurality of shapes obtained by dividing any desired shape. The shapes are separated more widely from each other starting from the corresponding position on the display screen as a distance of the space coordinates to a certain plane in a coordinate system of the space coordinates is longer, and the shapes are brought closer to each other toward the corresponding position on the display screen as the distance is shorter. Consequently, an effect of making it possible to appropriately perform feedback to the user is brought about when a noncontact operation is performed without using a controller.

According to the present invention, a pressed state is determined to have been entered with the updated space coordinates having passed the certain plane, and the shape before being divided obtained by combining the shapes with each other is displayed as the marker with the updated space coordinates having passed the certain plane. Consequently, an effect of making it possible to improve visibility so that a pressed state can be easily recognized is brought about when the user performs various kinds of operations such as a click, a drag, a pinch-out, a pinch-in, a swipe, and a flick.

According to the present invention, based on the updated space coordinates, a cursor is further displayed at the corresponding position on the display screen and, based on a position of the cursor when the updated space coordinates have passed the certain plane, a pressed state is determined to have been entered. Visibility can be thus improved so that an object to be pressed is easily recognized by, for example, adding the cursor near the center of the marker such as a crosshair, even in such a case as when the user operates at a position about a few meters apart from the display, or when objects to be operated such as GUI buttons are minute.

According to the present invention, the shape before being divided of the marker can be provided even with an annular ring, a donut shape, or a shape that does not cover the corresponding position on the display screen of the display unit. Consequently, an effect of not hiding the object to be pressed the user is about to press and making it possible to improve operability is brought about.

According to the present invention, the certain plane is set about a few centimeters off, and on the near side of, the display screen. The certain part of the user is a finger, a hand, or a palm, and the marker is displayed in a size larger than the certain part, or a separation range of the initial shape of the marker is displayed in a size larger than the certain part. Consequently, an effect of causing the user not to hide the object to be operated by his/her finger, a hand, or the like and making it possible to improve operability is brought about even in such cases as when operation is made near, or about a few centimeters off, the display.

According to the present invention, the distance of the space coordinates to the certain plane is a distance of the space coordinates to the certain plane on a side where the user is positioned. Consequently, an effect is brought about of making it possible to bring the shapes closer to each other toward the corresponding position on the display screen as the distance is brought closer to the certain plane from the user's side and determine, when the certain plane has been passed, that a selected state of a click or the like has been entered.

According to the present invention, the space coordinates are three-dimensional coordinates including two-dimensional coordinates on the certain plane parallel to the display screen and a depth coordinate perpendicular to the certain plane, the center of the marker is moved to a position corresponding to the display screen of the updated two-dimensional coordinates, and the shapes separated from the center are displayed more closely to each other as one continuous shape as the updated depth coordinate is brought closer to zero with respect to the certain plane. This operation can provide favorable feedback of input operation that can be used quickly and intuitively even at a short distance of a few centimeters to a long distance of a few meters.

### Brief Description of Drawings

FIG. 1 is a diagram illustrating an example of an immediate hover-button pressing system as a conventional example.
FIG. 2 is a diagram illustrating an example of a delayed hover-button pressing system as a conventional example.
FIG. 3 is a diagram illustrating an example of a push button cursor coloring system as a conventional example.
FIG. 4 is a block diagram illustrating an example of a configuration of an input support apparatus 100 to which the present embodiment is applied.
FIG. 5 is a diagram illustrating a position relation among a display of a display unit 114, an aerial pseudo touch panel, and a user when the present embodiment is applied to a noncontact operation from a short distance of about a few centimeters.
FIG. 6 is a diagram illustrating a position relation among the display of the display unit 114, the aerial pseudo touch panel, and the user when the present embodiment is applied to a noncontact operation from a long distance of about a few meters.
FIG. 7 is a diagram illustrating a position relation among the display of the display unit 114, the aerial pseudo touch panel, and the user when the present embodiment is applied to a noncontact operation in a head mount display.
FIG. 8 is a flowchart illustrating an example of input support processing of the input support apparatus 100 in the present embodiment.
FIG. 9 is a diagram schematically illustrating a push button marker system according to the present embodiment.
FIG. 10 is a diagram schematically illustrating a flick marker system of the present embodiment.
FIG. 11 is a diagram schematically illustrating a pinch marker system of the present embodiment.

### Description of Embodiments

The following describes embodiments of an input support apparatus, a method of input support, a computer program, and a recording medium according to the present invention in detail with reference to the drawings. The embodiments do not limit the present invention.

### Outline of Present Embodiment

The following describes the outline of the present embodiment according to the present invention while comparing it with conventional systems and then describes a configuration, processing, and the like of the present embodiment in detail. The description of this outline does not limit the configuration and the processing of the present embodiment described below.

Technical development and product development have been advanced that enable remote operation of a computer or the like with a hand or a finger in a noncontact manner using a detector such as a Kinect (registered trademark) sensor (manufactured by Microsoft Corporation) or a Leap sensor (manufactured by Leap Motion Inc.) without using a remote controller.

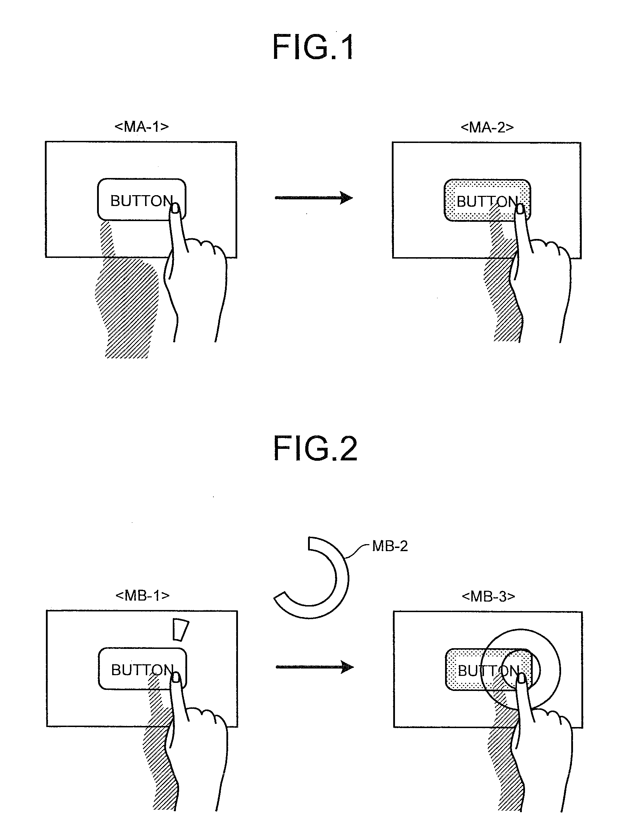

Use of such a detector enables reading of three-dimensional space coordinates of a hand or a finger of a user, and there is an attempt to implement a user interface using a hand or a finger of a user as an alternative of a pointing device. The following describes examples of conventional noncontact button pressing systems with reference to FIG. 1 through FIG. 3. FIG. 1 is a diagram illustrating an example of an immediate hover-button pressing system as a conventional example. The rectangular in the drawing is a display screen, and a button is displayed as an example of an object to be pressed in the display screen, where a state before a transition is illustrated to the left of the arrow, whereas a state after the transition is illustrated to the right of the arrow (the same hereinafter).

As illustrate in FIG. 1, the conventional immediate hover-button pressing system is a system in which when a user moves his/her finger (or a cursor that operates in coordination with the finger) to a location above an object desired to be pressed (causes the finger or cursor to hover thereabove), the button is immediately pressed (MA-1 to MA-2). As characteristics of the immediate hover-button pressing system, while the system has the advantage that there is no waiting time until pressing, the system has the disadvantages that, since the possibility of a misoperation is high, the system is not appropriate for an operation in which a misoperation brings danger, and that it is difficult to know the object to be pressed unless a cursor is displayed on the screen. FIG. 2 is a diagram illustrating an example of a delayed hover-button pressing system as a conventional example.

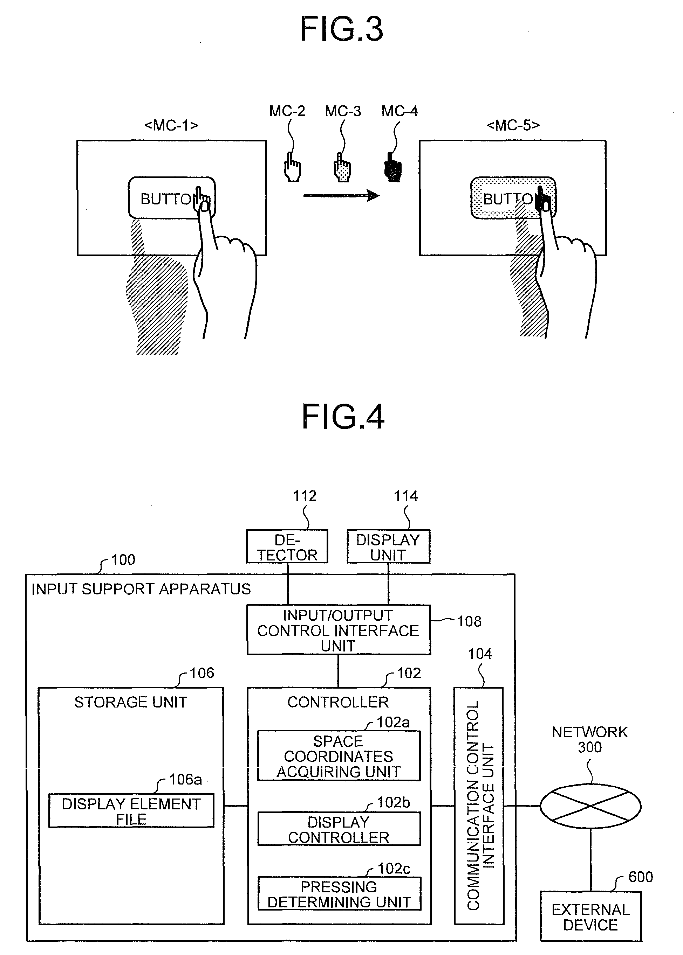

As illustrated in FIG. 2, the conventional delayed hover-button pressing system is a system in which when a user moves his/her finger (or a cursor that operates in coordination with the finger) to a location above an object desired to be pressed (causes the finger or cursor to hover thereabove) (MB-1), a circle is drawn with the finger (or the cursor that operates in coordination with the finger) at the center over a certain period of time clockwise in this example (MB-2), and after the certain period of time has elapsed, the object is pressed (MB-3). As characteristics of the delayed hover-button pressing system, while the system has the advantage that, since pressing is not performed for the certain period of time, the user can notice an error before the determination of pressing, and a misoperation can be prevented, the system has the disadvantage that the certain period of time is required for performing a pressing operation. FIG. 3 is a diagram illustrating a push button cursor coloring system as a conventional example.

As illustrated in FIG. 3, the conventional push button cursor coloring system is a system in which when an object to be pressed and a finger are separated widely from each other, a cursor is displayed in white (MC-1), when a user brings his/her finger close to the object to be pressed, the cursor changes its color in accordance with the distance (MC-2 through MC-4), and when the finger reaches a certain distance or less, the object is pressed (MC-5). As characteristics of the push button cursor coloring system, while the system has the advantages that the objet can be immediately pressed and that a misoperation can be prevented since there is feedback to the user before the object is pressed, the system has the disadvantage that, when used at a distance of a few centimeters, the cursor is difficult to see, for example, when the hand or the finger of the user is positioned in between the eye of the user and the cursor.

The inventors of the present invention have earnestly studied the above problems and completed the present invention. The embodiment of the present invention has the following characteristics.

Specifically, the present embodiment continuously acquires space coordinates of a certain part (a hand, a finger, a palm, a foot, or the like) of a user via a detector. As an example, the space coordinates may be three-dimensional coordinates (x,y,z) consisting of two dimensional coordinates (x-coordinate, y-coordinate) on a certain plane parallel to the display screen and a depth coordinate (z-coordinate) perpendicular to the certain plane.

The present embodiment, based on the updated space coordinates, performs display control to move a marker to a corresponding position on a display screen of a display unit. The present embodiment may preferably display the marker in a size larger than the certain part or display a separation range of the initial shape of the marker in a size larger than the certain part. The present embodiment may perform control to further display, apart from the marker, a cursor at the corresponding position on the display screen, based on the updated space coordinates in display control.

An initial shape of the marker includes a plurality of shapes obtained by dividing any shape (an annular ring, a donut shape, or the like). The present embodiment in the display control performs display control to separate the shapes from each other from the corresponding position on the display screen as a distance of the space coordinates to a certain plane in a coordinate system of the space coordinates (a distance to the certain plane on a side where the user is positioned or the like) is longer and brings the shapes close to each other to the corresponding position on the display screen as the distance is shorter.

The certain plane may be a plane that has a shape (a rectangular shape, for example) corresponding to the display screen and that is parallel to the display screen. In the present embodiment, the certain plane acts as a virtual touch panel (which may be referred to as an "aerial pseudo touch panel" hereinafter) in a space coordinate system. Specifically, when the user operates as if a touch panel is present in the air, the present embodiment performs favorable input support that improves visual feedback.

Subsequently, when the updated space coordinates have passed the certain plane (when the updated space coordinates have moved from the side on which the user is positioned to the opposite side of the certain plane or the like), the present embodiment may determine that a pressed state has been entered. An object to be pressed may be an object positioned at the center of the marker or an object at which the cursor is positioned.

As described above, the present embodiment has the advantage that, since not only the object to be pressed can be immediately pressed but also the user can have appropriate feedback before the object is pressed, a misoperation can be prevented. Even when used at a distance of a few centimeters, the marker is displayed around the finger or the like, and the advantage is provided that the possibility of inoperability owing to the invisibility of the marker is low. Consequently, the present embodiment overcomes the problems in the conventional examples and can contribute to remarkable improvement in operability.

The description of the outline of the present embodiment according to the present invention ends here. The following then describes the configuration, the processing, and the like of the present embodiment in detail.

### Configuration of Input Support Apparatus 100

The following first describes a configuration of the input support apparatus 100 according to the present embodiment. FIG. 4 is a block diagram illustrating an example of the configuration of the input support apparatus 100 to which the present embodiment is applied and conceptually illustrates only parts related to the present embodiment in the configuration.

The input support apparatus 100 in FIG. 4 schematically includes a controller 102 such as a CPU that comprehensively controls the entire input support apparatus 100, a communication control interface unit 104 connected to a communication apparatus (not illustrated) such as a router connected to a communication line or the like, an input/output control interface unit 108 connected to a detector 112, a display unit 114, and the like, and a storage unit 106 that stores therein various kinds of databases, tables, and the like. These units are communicably connected via any desired communication path.

The various kinds of databases and tables (such as a display element file 106a) stored in the storage unit 106 are storage units such as a fixed disk device and store therein various kinds of computer programs, tables, files, databases, web pages, and the like for use in various kinds of processing.

The display element file 106a among the components of the storage unit 106 is an element data storage unit that stores therein data displayable as display elements of a display screen. The display element file 106a may store therein data to be GUI buttons such as icons and objects such as characters, symbols, figures, and stereoscopic objects, for example. A data format of the data constituting the display elements may be any data format not limited to image data, character data, or the like. Results of action operations (a click, a drag, a pinch-out, a pinch-in, a swipe, a flick, and the like) on the display elements through processing by the controller 102 described below may be reflected in the data on the display element file 106a.

In FIG. 4, the input/output control interface unit 108 performs control of the detector 112 and the display unit 114. The display unit 114 is a display unit such as a liquid crystal panel or an organic EL panel, for example. The display unit 114 may be a head mount display or a three-dimensional display. The input support apparatus 100 may include a voice output unit such as a speaker (not illustrated), and the input/output control interface unit 108 may perform control of the voice output unit. Although the following embodiment may describe the display unit 114 as a monitor (including a home-use TV set), the present invention is not limited thereto.

The detector 112 is a sensor or the like for acquiring three-dimensional space coordinates of a certain part of a user. The function of the detector 112 is not being limited to direct acquisition of three-dimensional coordinates. The detector 112 may be two cameras that photograph a two-dimensional image from different angles and may analyze three-dimensional coordinates from a plurality of two-dimensional images through analysis by a space coordinates acquiring unit 102a described below, for example. As an example, the detector 112 may be a photographing unit such as a camera. The detector 112 may be a detector such as a CMOS sensor and a CCD sensor, for example. As described in Patent Literature 1, the detector 112 may project an optical pattern such as an infrared stripe pattern onto the user and perform clustering on stripe segments of the optical pattern, thereby performing area determination on a certain part such as a palm or detecting the depth of the palm. In addition, examples of the detector 112 include ultrasonic or electromagnetic distance measuring devices (a depth detector or the like) and proximity sensors. The detector 112 may be a combination of the depth detector (a depth sensor or the like) and a photographing unit (an RGB camera or the like). The detector 112 may be a Kinect (registered trademark) sensor (manufactured by Microsoft Corporation) or a Leap sensor (manufactured by Leap Motion Inc.) and may include, in addition to the sensor, a controller that calculates a three-dimensional map based on signals detected by the sensor as the former does. The controller in this case acts as a space coordinates acquiring unit described below. The detector 112 may be provided as a position detector that detects movements of persons in place of the photographing unit, and detect space coordinates of a light source or the like held by the user's hand or worn on the user's arm.

In FIG. 4, the controller 102 includes an internal memory for storing therein control programs such as an operating system (OS), computer programs that define various processing procedures and the like, and required data, and performs information processing for executing various kinds of processing through these programs and the like. The controller 102 functionally conceptually includes the space coordinates acquiring unit 102a, a display controller 102b, and a pressing determining unit 102c.

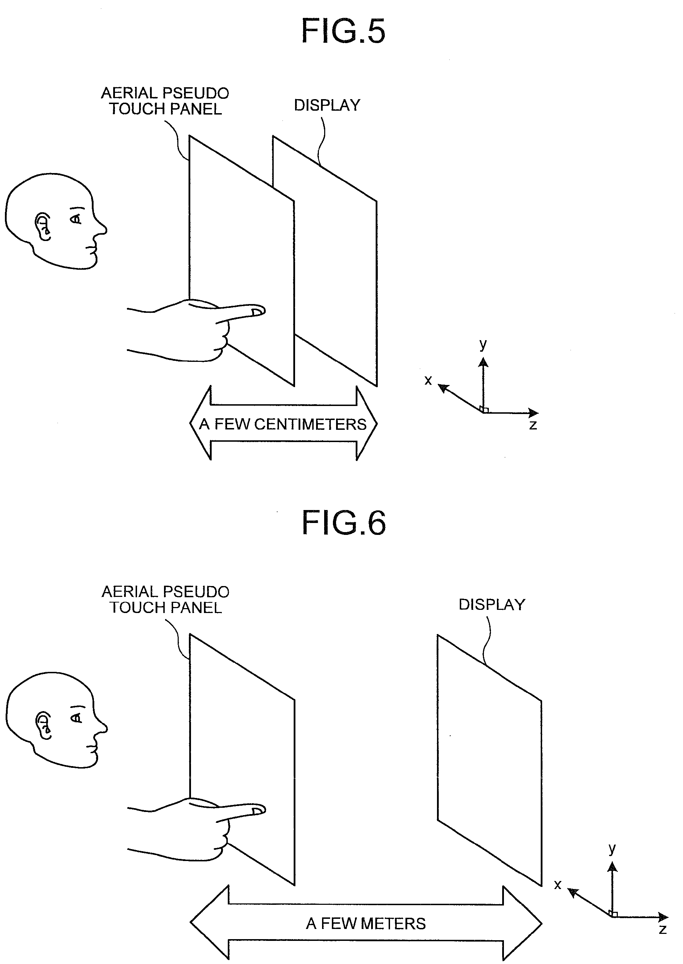

Among them, the space coordinates acquiring unit 102a is a space coordinates acquiring unit that continuously acquires space coordinates of a certain part of the user via the detector 112. Via the detector 112 including the depth sensor and the RGB camera, a depth coordinate (z-coordinate) may be acquired from the depth sensor, an area of the certain part (a hand, a palm, or the like) may be determined from a two-dimensional image acquired from the RGB camera, and plane coordinates (x-coordinate, y-coordinate) as the central coordinates (the barycentric coordinates of a hand area subjected to area recognition, for example) of the area may be acquired, for example. The space coordinates acquiring unit 102a may acquire respective two pieces of image data from the detector 112 including two cameras and conduct comparison analysis thereon, thereby generating a three-dimensional map of depth positions or the like of respective points of the user including the certain part and acquiring space coordinates (x,y,z) corresponding to the certain part. FIG. 5 through FIG. 7 are diagrams illustrating respective position relations among a display of the display unit 114, the aerial pseudo touch panel, and the user when the present embodiment is applied to a noncontact operation from a short distance of about a few centimeters, a noncontact operation from a long distance of about a few meters, and a noncontact operation in a head mount display. As a coordinate system, an orthogonal coordinate system consisting of an x-axis, a y-axis, and a z-axis is illustrated.

As illustrated in FIG. 5, when the present embodiment is used for the noncontact operation from a short distance of about a few centimeters, the certain plane may be set in a coordinate space so that a pseudo touch panel can be present in the nearby air about a few centimeters off the display. In the short-distance use, the certain part (a finger or the like) of the user itself acts as a cursor, and no cursor is required to be displayed. Although a cursor is required to be displayed on the screen as a pointing device for detailed operations to be performed, displaying a cursor is unnecessary if rough operations are acceptable.

As illustrated in FIG. 6, when the present embodiment is used for the noncontact operation from a long distance of about a few meters, the certain plane may be set in the coordinate space so that the pseudo touch panel can be present in the air at a position few meters or more apart from the display. In using the certain part such as the finger as the pointing device, it is desirable that a cursor be displayed on the screen under the control of the display controller 102b, unlike the touch panel.

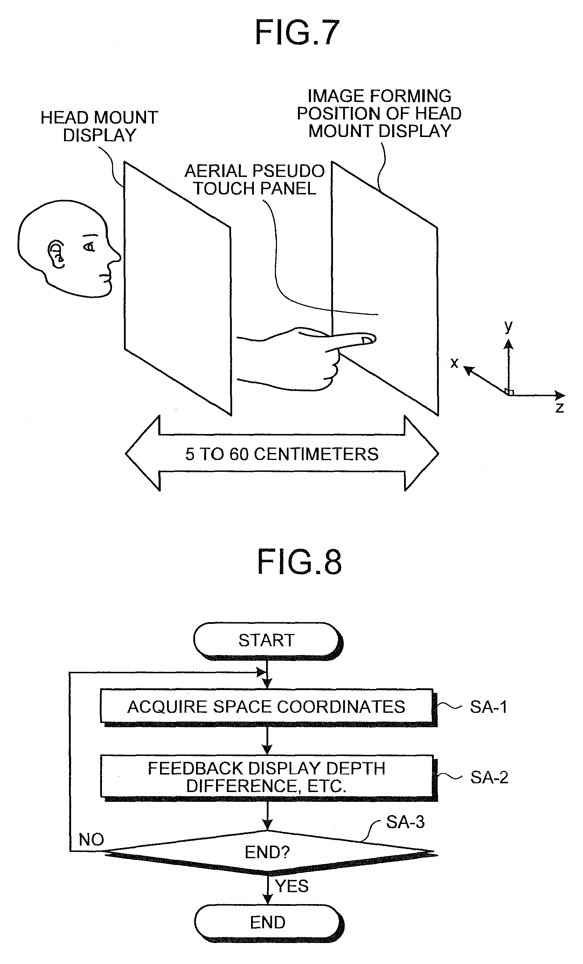

As illustrated in FIG. 7, when the present embodiment is used for the noncontact operation in the head mount display (HMD), the certain plane may be set so that the aerial pseudo touch panel can be present at an image forming position of an image. In this case, the image forming position can move forward and backward depending on the user, and the input support apparatus 100 may perform control to finely adjust the depth of the aerial pseudo touch panel (the same for a three-dimensional display). When an obstacle (the hand of the user or the like) is interposed in between the HMD and the image forming position, a position where an image is formed can be displaced and can give an impression that it is positioned in front of the obstacle, and the space coordinates acquiring unit 102a may read the shape of the obstacle via the detector 112, and the display controller 102b may perform control not to display an image of a part hidden by the obstacle when display is present at the image forming position, thereby making the image forming position less likely to be displaced.

The above and following embodiments may describe the xy plane in the coordinate system of the three-dimensional space coordinates acquired from the space coordinates acquiring unit 102a as a plane parallel to the display of the display unit 114 and the aerial pseudo touch panel, and describe the z-axis as an axis perpendicular to the display of the display unit 114 and the aerial pseudo touch panel for easiness of description. However, the present embodiment is not limited thereto. The coordinate system acquired by the space coordinates acquiring unit 102a may be a coordinate system having no axis that is perpendicular or parallel to the display or the aerial pseudo touch panel, for example. Even when such a coordinate system is used, the certain plane (that is, the aerial pseudo touch panel) parallel to the display can be defined in the coordinate space mathematically, and a person skilled in the art can carry it out. Although the present embodiment may provide a description on the premise that the display and the aerial pseudo touch panel are parallel to each other, they are not necessarily required to be mathematically parallel to each other, and they are not required to be parallel to each other so long as the user can instinctively associate the upward, downward, leftward, and rightward directions of the display and the upward, downward, leftward, and rightward movements of the finger or the like with each other. The certain plane (the aerial pseudo touch panel) may be set based on a distance from the display screen (display) of the display unit 114 or set based on a distance from the user. As an example of the latter, the display controller 102b may automatically set the certain plane at a position a certain distance (depth) apart from an initial position of the certain part of the user.

Referring back to FIG. 4, the display controller 102b is a display controller that performs display control of the display unit 114. The display controller 102b may display GUI buttons such as icons on the display of the display unit 114 based on the data stored in the display element file 106a, for example. Not being limited thereto, the display controller 102b may acquire data such as a web page from an external device 600 such as a server via a network 300 such as the Internet and may perform control to display the web page on the display unit 114 or the like in accordance with the acquired data.

In the present embodiment, the display controller 102b, based on the space coordinates updated by the space coordinates acquiring unit 102a, performs display control that moves the marker to a corresponding position (hereinafter, may be referred to as a "marker central position") on the display screen of the display unit 114. More specifically, in the orthogonal coordinate system, the display controller 102b may move the center of the marker to corresponding pixel coordinates (x',y') on the display of two-dimensional coordinates (x,y) updated by the space coordinates acquiring unit 102a. Transformation from the two-dimensional coordinates (x,y) of a three-dimensional space coordinate system to the pixel coordinates (x',y') of a screen coordinate system can be calculated by a known method based on a relation between the aerial touch panel and the display.

The display controller 102b performs feedback processing that changes the shape of the marker in accordance with a distance to the certain plane (the aerial pseudo touch panel) from the space coordinates updated by the space coordinates acquiring unit 102a. The display controller 102b, based on the space coordinates updated by the space coordinates acquiring unit 102a, separates a plurality of shapes obtained by dividing the shape of the marker more widely from each other starting from the corresponding position on the display screen (the marker central position) as the distance to the aerial pseudo touch panel is longer, and brings the shapes closer to each other to the marker central position as the distance to the aerial pseudo touch panel is shorter, for example. More specifically, in the orthogonal coordinate system, the display controller 102b, based on the depth z-coordinate updated by the space coordinates acquiring unit 102a, displays the shapes separated from a central position (x',y') more closely to each other as one continuous shape as the distance to the certain plane is brought closer to zero. With the updated space coordinates having passed the certain plane, the display controller 102b displays the marker having a shape before being divided that is obtained by combining the shapes. In this situation, at the same time, the pressing determining unit 102c described below determines that a pressed state has been entered.

The shape before being divided of the marker may be an annular ring, a donut shape, a shape (a circle, a triangle, a quadrangle, a hexagon, or a star shape, for example) from which a combined shape is easily predictable, or a shape (obtained by displaying the periphery (contour) of a circle, a triangle, a quadrangle, a hexagon, or a star shape, for example) that does not cover the corresponding position on the display (the central position) of the display unit 114. For the sake of visual recognition by the user, it is desirable that the display controller 102b display the marker in a size larger than the certain part or display a separation range of the initial shape of the marker in a size larger than the certain part.

The display controller 102b may further display a cursor at the corresponding central position on the display screen based on the space coordinates updated by the space coordinates acquiring unit 102a. More specifically, in the orthogonal coordinate system, the display controller 102b may display the cursor while moving it at the corresponding pixel coordinates (x',y') on the display of the two-dimensional coordinates (x,y) updated by the space coordinates acquiring unit 102a. For example, when the object to be pressed is minute, the cursor is thus added to the center of the marker with a crosshair or the like, thereby enabling the object to be pressed to be displayed so as to be easily distinguished by the user.

The pressing determining unit 102c is a pressing determining unit that determines, when the updated space coordinates have passed the certain plane, that a pressed state has been entered. The pressing determining unit 102c may determine, when a trajectory of the updated space coordinates has reached the certain plane from the user's side, that the pressed state has been entered, for example. The pressed state is not limited to button pressing in a click operation and also includes pressed states in various operations such as a drag, a pinch-out, a pinch-in, a swipe, and a flick. The pressing determining unit 102c may make the determination by using the marker central position (x',y') or the position of the cursor (x',y') as the object to be pressed.

In FIG. 4, the communication control interface unit 104 is an apparatus that performs communication control between the input support apparatus 100 and the network 300 (or a communication apparatus such as a router), and communication control between the input support apparatus 100 and a receiving apparatus (not illustrated). In other words, the communication control interface unit 104 has a function of exchanging data with other terminals or stations via a communication line (regardless of whether it is wired or wireless). The receiving apparatus is a receiving unit that receives radio waves or the like from broadcasting stations or the like and is an antenna, for example.

In other words, the input support apparatus 100 may be communicably connected to the external device 600 that provides, for example, an image data-related external database and external computer programs such as the computer program according to the present invention via the network 300. The input support apparatus 100 may be connected via the receiving apparatus to a broadcasting station or the like that transmits image data or the like, so as to be able to receive such data. The input support apparatus 100 may be communicably connected to the network 300 via a communication apparatus such as a router and a wired or wireless communication line such as an exclusive line.

In FIG. 4, the network 300 has a function of mutually connecting the input support apparatus 100 and the external device 600 and is the Internet, for example.

In FIG. 4, the external device 600 is mutually connected to the input support apparatus 100 via the network 300 and has a function of providing the image data-related external database and a website that executes the external computer programs such as the computer program to the user.

The external device 600 may be configured as a WEB server or an ASP server, and its hardware configuration may be made with an information processing apparatus such as a commonly commercially available workstation and personal computer and its peripheries. The functions of the external device 600 are implemented by a CPU, a disk apparatus, a memory apparatus, an input apparatus, an output apparatus, a communication control apparatus, and the like in the hardware configuration of the external device 600 and a computer program and the like that control them.

### Input Support Processing

The following describes an example of input support processing by the input support apparatus 100 in the present embodiment configured as described above in detail with reference to FIG. 8 through FIG. 11. FIG. 8 is a flowchart illustrating an example of the input support processing of the input support apparatus 100 in the present embodiment. The following processing is started on the premise that the display unit 114 is displaying some display element under the control of the display controller 102b.

As illustrated in FIG. 8, the space coordinates acquiring unit 102a first acquires space coordinates of a certain part of a user via the detector 112 (Step SA-1). Via the detector 112 including the depth sensor and the RGB camera, a depth coordinate (z-coordinate) may be acquired from the depth sensor, an area of a certain part (a hand, a palm, or the like) may be determined from a two-dimensional image acquired from the RGB camera, and plane coordinates (x-coordinate, y-coordinate) as central coordinates (barycentric coordinates of a hand area subjected to area recognition, for example) of the area may be acquired, thereby acquiring three-dimensional space coordinates (x,y,z), for example.

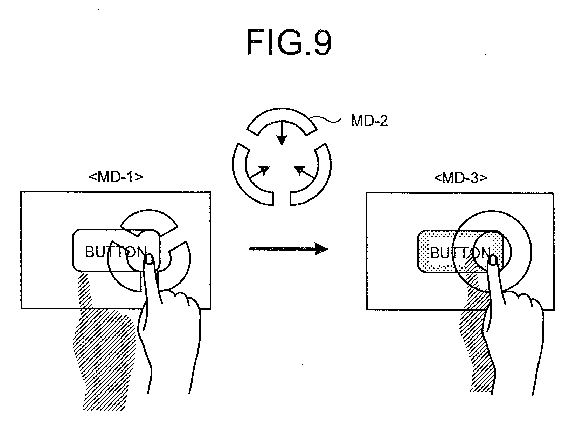

The display controller 102b, based on the space coordinates (x,y,z) acquired by the space coordinates acquiring unit 102a, moves the center of the marker to the corresponding position (x',y') on the display of the display unit 114 and performs feedback processing that changes the shape of the marker in accordance with the depth (Step SA-2). In the orthogonal coordinate system, the display controller 102b, in accordance with the z-coordinate of the space coordinates (x,y,z), displays the shapes obtained by dividing the shape of the marker so that the shapes can be more widely separated from each other starting from the marker central position (x',y') as the distance to the aerial pseudo touch panel is longer, and displays the shapes so that the shapes can be gathered more closely to the marker central position (x',y') as the distance to the aerial pseudo touch panel is shorter, for example. Furthermore, when the distance to the aerial pseudo touch panel becomes zero, the display controller 102b displays the marker with the shape before being divided and at the same time the pressing determining unit 102c determines that a pressed state has been entered. The pressing determining unit 102c sets the marker central position (x',y') to be the object to be pressed. FIG. 9 is a diagram schematically illustrating a push button marker system according to the present embodiment.

As illustrated in <MD-1> in FIG. 9, when the aerial pseudo touch panel and the finger are separated more widely from each other, the display controller 102b displays the markers with the distance therebetween widely separated. When the user brings his/her finger close to the object to be pressed, the display controller 102b brings the markers close to each other in accordance with a distance by which the finger has been brought close thereto (MD-2). When the finger reaches a certain distance or less, and the markers are combined into a circular shape by the display controller 102b, the pressing determining unit 102c determines that the object to be pressed is pressed (MD-3). The display controller 102b may further display a cursor at the marker central position (x', y') with a crosshair or the like.

Referring back to FIG. 8, the controller 102 of the input support apparatus 100 determines whether the input support processing ends (Step SA-3). If it is determined that the input support processing does not end (No at Step SA-3), the controller 102 of the input support apparatus 100 returns the processing to Step SA-1, where the space coordinates acquiring unit 102a updates the space coordinates (x,y,z) (Step SA-1), and the pieces of processing at Step SA-1 through Step SA-3 are repeated. If ending of the input support processing is instructed from the user, for example, the input support apparatus 100 determines that the input support processing ends (Yes at Step SA-3), thereby ending the foregoing processing.

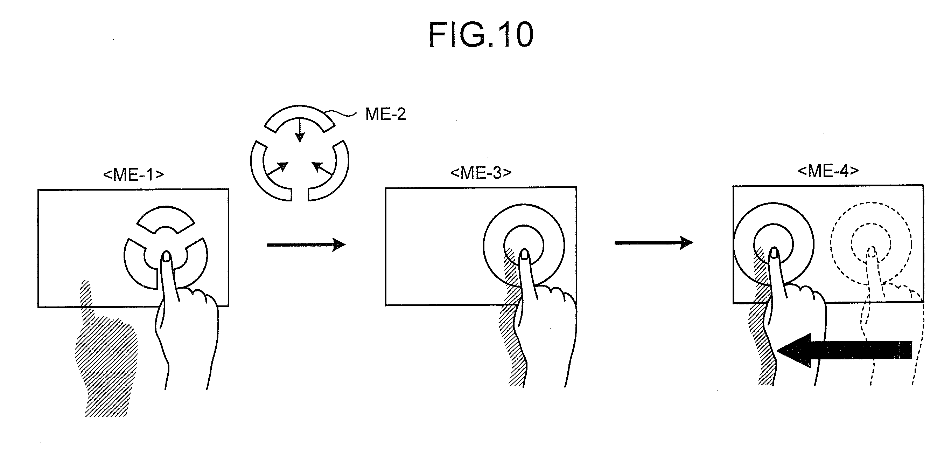

The foregoing is an example of the input support processing. Although the example in FIG. 9 illustrates an example of button pressing in the click operation, that is not limiting, and the input support processing can be used for pressing determination in various operations (gesture input or the like) such as a drag, a pinch-out, a pinch-in, a swipe, and a flick. FIG. 10 is a diagram schematically illustrating a flick marker system of the present embodiment.

As illustrated in <ME-1> in FIG. 10, when the aerial pseudo touch panel and the finger are separated widely from each other, the display controller 102b displays the markers with the distance therebetween widely separated. When the user brings his/her finger close to the object to be pressed, the display controller 102b brings the markers close to each other in accordance with a distance by which the finger has been brought close thereto (ME-2). When the finger reaches a certain distance or less, and the markers are combined into a circular shape by the display controller 102b (ME-3), the pressing determining unit 102c determines that the object to be pressed has entered a pressed state. In that situation, when the user moves his/her finger in a direction desired to flick, that is, when the finger is moved in a direction desired to operate after the markers become a circular shape (ME-4), the controller 102 of the input support apparatus 100 receives a flick operation.

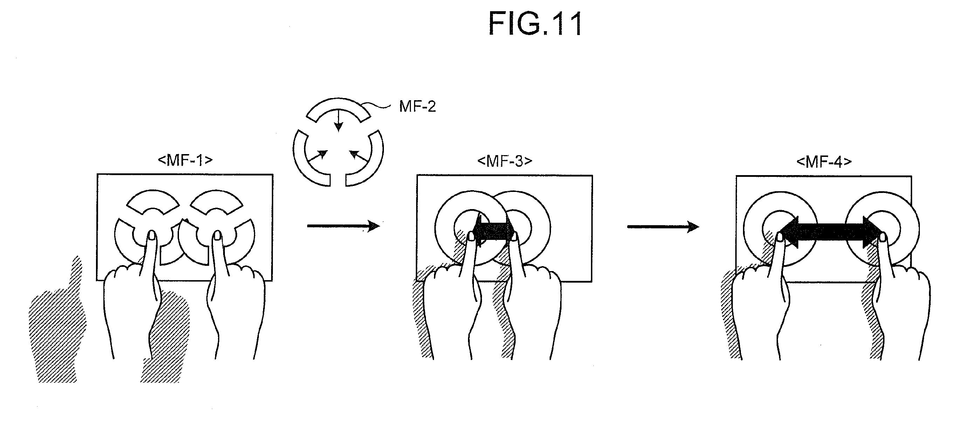

As characteristic of the flick marker system, the system has the advantages that a distance receiving a flick is clearly known, and that the number of misoperations can be minimized, for example. Another advantage is that even when used at a distance of a few centimeters, the marker is displayed around the finger, and the possibility of inoperability owing to the invisibility of the marker is low. As another example of gesture input, FIG. 11 is a diagram schematically illustrating a pinch marker system of the present embodiment.

As illustrated in <MF-1> in FIG. 11, the space coordinates acquiring unit 102a can also recognize space coordinates of two certain parts of the user, and the display controller 102b displays the two markers with the distance therebetween widely separated in accordance with the distance between the aerial pseudo touch panel and fingers. When the user brings his/her fingers close to the object to be pressed, the display controller 102b brings the markers close to each other in accordance with a distance by which the fingers have been brought close thereto (MF-2). When the fingers reach a certain distance or less, and the two markers are combined into respective circular shapes by the display controller 102b (MF-3), the pressing determining unit 102c determines that the objects to be pressed have both entered pressed states. In that situation, when the user moves his/her two fingers (MF-3 and 4), the controller 102 of the input support apparatus 100 receives pinch-in and pinch-out gesture input (MF-4).

As characteristics of the pinch marker system, the system has the advantages that a distance receiving a flick is clearly known, that the number of misoperations can be minimized, and that, even when used at a distance of a few centimeters, the possibility of inoperability owing to the invisibility of the marker is low because the marker is displayed around the finger. Another advantage is that it can be easily recognized how much separation from the object is needed for ending the gesture input, and a movement amount of a hand during input can be minimized.

In recognizing gestures in a noncontact manner, there have been several problems that it is difficult for users to know which part functions to recognize a gesture and to what distance a gesture can be recognized. The gesture input by the marker systems of the present embodiment, owing to the presence of the marker, brings about remarkable effects of making it easy for users to recognize whether recognition of a gesture has started and making it possible to easily use gestures such as multi-touch even in a noncontact manner.

### Other Embodiments

Embodiments of the present invention have been described. The present invention may be performed with various different embodiments within the scope of the technical idea described in the claims apart from the embodiment.

In particular, as to the marker system by the present embodiment and the conventional hover button (pressing after a certain period of time) system, it is not necessarily that only either one of them is used, and both of them can be implemented in combination. For example, a combined use of a tap and a gesture by the marker system according to the present embodiment can improve usability in total.

Although a case in which the input support apparatus 100 performs processing in the stand-alone form has been described as an example, the input support apparatus 100 may perform processing in response to a request from a client terminal (a separate unit from the input support apparatus 100) and return its processing result to the client terminal.

The whole or part of the processing described as being automatically performed among the pieces of processing described in the embodiment can also be performed manually, or the whole or part of the processing described as being manually performed can also be performed automatically by known methods.

In addition, the processing procedures, the control procedures, the specific names, the information including registration data of the respective pieces of processing and parameters such as search conditions, the screen examples, and the database configurations described or illustrated in the literature or drawings can freely be changed unless otherwise specified.

The illustrated components of the input support apparatus 100 are functionally conceptual and are not necessarily required to be physically constituted as illustrated.

The whole or part of the processing functions possessed by the respective apparatuses of the input support apparatus 100, especially the processing functions to be performed by the controller 102 may be implemented by a central processing unit (CPU) and a computer program analysis executed by the CPU or implemented as hardware by wired logic, for example. The computer program is recorded in a non-transitory computer-readable recording medium including programmed instructions for causing a computer to execute a method according to the present invention described below and is mechanically read by the input support apparatus 100 as needed. In other words, the storage unit 106 or the like such as a read-only memory (ROM) or a hard disk drive (HDD) stores therein a computer program for giving instructions to the CPU in cooperation with an operating system (OS) and performing various kinds of processing. The computer program is executed by being loaded to a random access memory (RAM) and constitutes a controller in cooperation with the CPU.

The computer program may be stored in an application program server connected to the input support apparatus 100 via any desired network 300, and the whole or part thereof can be downloaded as needed.

The computer program according to the present invention may be stored in a computer-readable recording medium or constituted as a program product. The "recording medium" includes any "portable physical medium" such as a memory card, a universal serial bus (USB) memory, a secure digital (SD) card, a flexible disk, a magneto-optical disk, a ROM, an erasable programmable ROM (EPROM), an electrically erasable and programmable ROM (EEPROM), a compact disc read only memory (CD-ROM), an MO, a digital versatile disc (DVD), and a Blu-ray (registered trademark) disc.

The "computer program" is a method of data processing described in any desired language or method of description and may have any desired format such as source code or binary code. The "computer program" is not necessarily limited to be a singly constituted computer program and includes a computer program constituted in a distributed manner as a plurality of modules or libraries and a computer program that achieves its function in cooperation with other computer programs represented by an operating system (OS). Known configurations and procedures can be used for a specific configuration, a reading procedure, an installing procedure after reading, and the like for reading the recording medium in the respective apparatuses illustrated in the embodiment.

The various kinds of databases and the like (the display element file 106a and the like) stored in the storage unit 106 are storage units such as a memory apparatus such as a RAM and a ROM, a fixed disk device such as a hard disk, a flexible disk, and an optical disk and store therein various kinds of computer programs, tables, databases, and files for web pages for use in various kinds of processing and provision of websites.

The input support apparatus 100 may be constituted as an information processing apparatus such as a known personal computer and workstation, and any desired peripherals may be connected to the information processing apparatus. The input support apparatus 100 may be implemented by mounting software (including computer programs and data) that causes the information processing apparatus to implement the method of the present invention.

Furthermore, the specific form of distribution and integration of the apparatus is not limited to the illustrated form, and the whole or part thereof can be constituted with functional or physical distribution and integration based on any desired unit in accordance with various kinds of loads or in accordance with functional loads. In other words, the embodiment may be performed with any desired combination, or the embodiment may be performed selectively.

### Industrial Applicability

As described above in detail, the present invention can provide an input support apparatus, a method of input support, a computer program, and a recording medium that can appropriately perform feedback to a user when a noncontact operation is performed without using a controller.

### Reference Signs List

- 100: Input support apparatus
- 102: Controller
- 102a: Space coordinates acquiring unit
- 102b: Display controller
- 102c: Pressing determining unit
- 104: Communication control interface unit
- 106: Storage unit
- 106a: Display element file
- 108: Input/output control interface unit
- 112: Detector
- 114: Display unit
- 300: Network
- 600: External device

## Claims

1. An input support apparatus comprising:
a space coordinates acquiring unit that continuously acquires space coordinates of a certain part of a user via a detector; and
a display controller that, based on the space coordinates updated by the space coordinates acquiring unit, performs display control to move a marker to a corresponding position on a display screen of a display unit, wherein
an initial shape of the marker includes a plurality of shapes obtained by dividing any desired shape, and
the display controller separates the shapes more widely from each other starting from the corresponding position on the display screen as a distance of the space coordinates to a certain plane in a coordinate system of the space coordinates is longer, and brings the shapes closer to each other toward the corresponding position on the display screen as the distance is shorter.

2. The input support apparatus according to claim 1, further comprising:
a pressing determining unit that, when the updated space coordinates have passed the certain plane, determines that a pressed state has been entered, wherein
with the updated space coordinates having passed the certain plane, the display controller displays as the marker the shape before being divided obtained by combining together the shapes.

3. The input support apparatus according to claim 2, wherein
based on the space coordinates updated by the space coordinates acquiring unit, the display controller further displays a cursor at the corresponding position on the displays screen, and
with the updated space coordinates having passed the certain plane, the pressing determining unit determines that a position of the cursor has entered the pressed state.

4. The input support apparatus according to any one of claims 1 to 3, wherein the shape before being divided of the marker is an annular ring, a donut shape, or a shape from which a combined shape is easily predictable.

5. The input support apparatus according to any one of claims 1 to 4, wherein
the certain plane is set about a few centimeters off, and on a near side of, the display screen,
the certain part of the user is a finger, a hand, or a palm, and
the display controller displays the marker in a size larger than the certain part or displays a separation range of the initial shape of the marker in a size larger than the certain part.

6. The input support apparatus according to any one of claims 1 to 5, wherein the distance of the space coordinates to the certain plane is a distance of the space coordinates to the certain plane on a side where the user is positioned.

7. The input support apparatus according to any one of claims 1 to 6, wherein
the space coordinates are three-dimensional coordinates comprising two-dimensional coordinates on the certain plane parallel to the display screen and a depth coordinate perpendicular to the certain plane, and
the display controller
moves a center of the marker to a position corresponding to the display screen of the two-dimensional coordinates updated by the space coordinates acquiring unit, and
displays the shapes separated from the center more closely to each other as one continuous shape as the depth coordinate updated by the space coordinates acquiring unit is brought closer to zero with respect to the certain plane.

8. A method of input support executed by a computer, the method comprising:
continuously acquiring space coordinates of a certain part of a user via a detector; and
based on the space coordinates updated at the acquiring, performing display control to move a marker to a corresponding position on a display screen of a display unit, wherein
an initial shape of the marker includes a plurality of shapes obtained by dividing any desired shape, and
the performing of display control includes separating the shapes more widely from each other starting from the corresponding position on the display screen as a distance of the space coordinates to a certain plane in a coordinate system of the space coordinates is longer and bringing the shapes closer to each other toward the corresponding position on the display screen as the distance is shorter.

9. A computer program causing a computer to execute:
continuously acquiring space coordinates of a certain part of a user via a detector; and
based on the space coordinates updated at the acquiring, performing display control to move a marker to a corresponding position on a display screen of a display unit, wherein
an initial shape of the marker includes a plurality of shapes obtained by dividing any shape, and
the performing of display control includes separating the shapes more widely from each other from the corresponding position on the display screen as a distance of the space coordinates to a certain plane in a coordinate system of the space coordinates is longer and bringing the shapes closer to each other toward the corresponding position on the display screen as the distance is shorter.

## Amended claims

### Amended claims under Art. 19.1 PCT

**1.** (amended) An input support apparatus comprising:
a space coordinates acquiring unit that continuously acquires space coordinates of a certain part of a user via a detector;
a display controller that, based on the space coordinates updated by the space coordinates acquiring unit, performs display control to move a marker to a corresponding position on a display screen of a display unit; and
a pressing determining unit that, when the updated space coordinates have passed a certain plane in a coordinate system of the space coordinates, determines that a pressed state has been entered, wherein
an initial shape of the marker includes a plurality of shapes obtained by dividing any one desired shape, and
the display controller
separates the shapes more widely from each other starting from the corresponding position on the display screen as a distance of the space coordinates to the certain plane is longer,
brings the shapes closer to each other toward the corresponding position on the display screen as the distance is shorter, and
displays as the marker the one shape before being divided obtained by combining together the shapes with the updated space coordinates having passed the certain plane.

**2.** cancelled)

**3.** (amended) The input support apparatus according to claim 1, wherein
based on the space coordinates updated by the space coordinates acquiring unit, the display controller further displays a cursor at the corresponding position on the displays screen, and
with the updated space coordinates having passed the certain plane, the pressing determining unit determines that a position of the cursor has entered the pressed state.

**4.** The input support apparatus according to any one of claims 1 to 3, wherein the shape before being divided of the marker is an annular ring, a donut shape, or a shape from which a combined shape is easily predictable.

**5.** The input support apparatus according to any one of claims 1 to 4, wherein
the certain plane is set about a few centimeters off, and on a near side of, the display screen,
the certain part of the user is a finger, a hand, or a palm, and
the display controller displays the marker in a size larger than the certain part or displays a separation range of the initial shape of the marker in a size larger than the certain part.

**6.** The input support apparatus according to any one of claims 1 to 5, wherein the distance of the space coordinates to the certain plane is a distance of the space coordinates to the certain plane on a side where the user is positioned.

**7.** The input support apparatus according to any one of claims 1 to 6, wherein
the space coordinates are three-dimensional coordinates comprising two-dimensional coordinates on the certain plane parallel to the display screen and a depth coordinate perpendicular to the certain plane, and
the display controller
moves a center of the marker to a position corresponding to the display screen of the two-dimensional coordinates updated by the space coordinates acquiring unit, and
displays the shapes separated from the center more closely to each other as one continuous shape as the depth coordinate updated by the space coordinates acquiring unit is brought closer to zero with respect to the certain plane.

**8.** (amended) A method of input support executed by a computer, the method comprising:
continuously acquiring space coordinates of a certain part of a user via a detector;
based on the space coordinates updated at the acquiring, performing display control to move a marker to a corresponding position on a display screen of a display unit; and
when the updated space coordinates have passed a certain plane in a coordinate system of the space coordinates, determining that a pressed state has been entered, wherein
an initial shape of the marker includes a plurality of shapes obtained by dividing any one desired shape, and
the performing of display control includes
separating the shapes more widely from each other starting from the corresponding position on the display screen as a distance of the space coordinates to the certain plane is longer,
bringing the shapes closer to each other toward the corresponding position on the display screen as the distance is shorter, and
displaying as the marker the one shape before being divided obtained by combining together the shapes with the updated space coordinates having passed the certain plane.

**9.** (amended) A computer program causing a computer to execute:
continuously acquiring space coordinates of a certain part of a user via a detector;
based on the space coordinates updated at the acquiring, performing display control to move a marker to a corresponding position on a display screen of a display unit; and
when the updated space coordinates have passed a certain plane in a coordinate system of the space coordinates, determining that a pressed state has been entered, wherein
an initial shape of the marker includes a plurality of shapes obtained by dividing any one desired shape, and
the performing of display control includes:
separating the shapes more widely from each other from the corresponding position on the display screen as a distance of the space coordinates to the certain plane is longer,
bringing the shapes closer to each other toward the corresponding position on the display screen as the distance is shorter, and
displaying as the marker the one shape before being divided obtained by combining together the shapes with the updated space coordinates having passed the certain plane.

Statement under Art. 19.1 PCT
Claim 1 is amended to replace the expression "any desired shape" with the expression "any one desired shape" based on paragraphs [0060] and [0071] of the description and Fig. 9, etc as filed, and to add the expression "a pressing determining unit that, when the updated space coordinates have passed a certain plane in a coordinate system of the space coordinates, determines that a pressed state has been entered" and "displays as the marker the one shape before being divided obtained by combining together the shapes with the updated space coordinates having passed the certain pine" based on paragraph [0059] of the description and the claim 2,.etc as filed.

Claim 2 is canceled.

Claim 3 is amended to change dependent form from Claim 2 into dependent form from Claim 1.

Claim 8 is amended to replace the expression "any desired shape" with the expression "any one desired shape" based on paragraphs [0060] and [0071] of the description and Fig. 9,.etc as filed, and to add the expression "when the updated space coordinates have passed a certain plane in a coordinate system of the space coordinates, determining that a pressed state has been entered" and "displaying as the marker the one shape before being divided obtained by combining together the shapes with the updated space coordinates having passed the certain plane" based on paragraph [0059] of the description and the claim 2,.etc as filed.

Claim 9 is amended to replace the expression "any desired shape" with the expression "any one desired shape" based on paragraphs [0060] and [0071] of the description and Fig. 9,.etc as filed, and to add the expression "when the updated space coordinates have passed a certain plane in a coordinate system of the space coordinates, determining that a pressed state has been entered" and "displaying as the marker the one shape before being divided obtained by combining together the shapes with the updated space coordinates having passed the certain plane" based on paragraph [0059] of the description and the claim 2,.etc as filed.
